# EUROPEAN PATENT APPLICATION

(11) **EP 1 737 261 A1**
(43) Date of publication of application: **27.12.2006**
(21) Application number: 05734121.6
(22) Date of filing: 22.04.2005
(51) Int. Cl.: H04Q 7/36, H04B 7/26

(54) **CONTROL STATION APPARATUS AND BASE STATION APPARATUS**

(30) Priority: 07.05.2004 JP 2004139119
(71) Applicant: MATSUSHITA ELECTRIC INDUSTRIAL CO., LTD., Osaka 571-8501 (JP)
(72) Inventor: FUKUI, Akito., c/o Matsushita El.Ind.Co.Ltd, Osaka 540-6319 (JP)
(74) Representative: Grünecker, Kinkeldey, Stockmair & Schwanhäusser Anwaltssozietät
(86) International application number: PCT/JP2005/007712
(87) International publication number: WO 2005/109935

(57) **Abstract**

A control station apparatus ensures that, even if transmission times are changed and set, data of channels can be acquired at the receiving end. In this apparatus, a synchronization part (102) uses an RFN counter value and a BFN counter value to synchronize an RNC with a Node (B). An NBAP part (104) sets a changed interval variable and decides, from information of an SFN counter value and a CFN counter value with which the RFN counter value is synchronized, a timing at which to change the changed interval, and transmits, as operation time information, the decided timing to the Node (B). An FP part (107) repetitively transmits the same MCCH data to the Node (B) in a predetermined period for each of changed intervals, while transmitting MICH data to the Node (B) at a predetermined timing.

## Description

### Technical Field

The present invention relates to a control station apparatus and a base station apparatus. More specifically, the present invention relates to a control station apparatus and a base station apparatus providing multicast packet communication services.

### Background Art

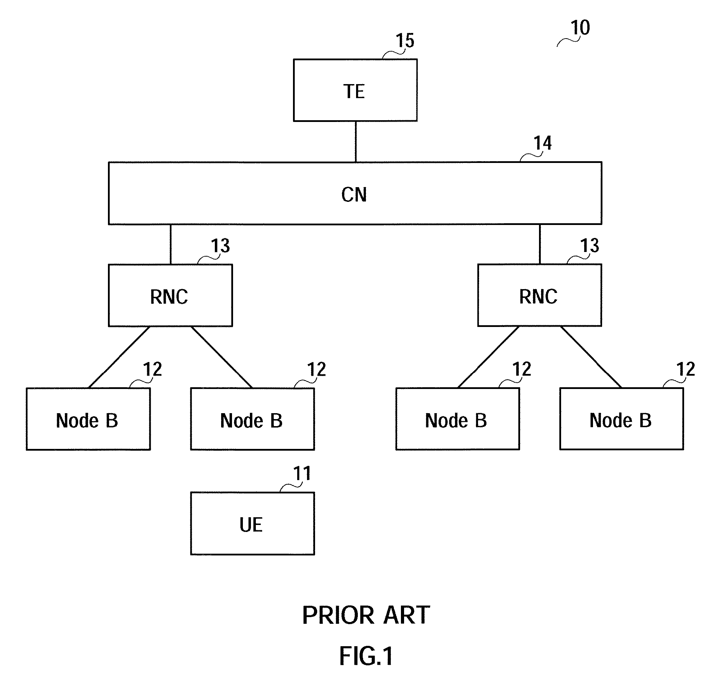

As shown in FIG.1, a packet communication system 10 includes mobile terminals (hereinafter referred to as "UEs") 11, base station apparatuses (hereinafter referred to as "Nodes B") 12, radio network controllers (hereinafter referred to as "RNCs") 13 to control Nodes B 12, a core network (hereinafter referred to as "CN") 14 to manage the positions of the UEs 11 and perform connection control, and a party on the other end (hereinafter referred to as "TE") 15 communicating with the UE 11. Each RNC 13 connects to a plurality of Nodes B 12, and each Node B 12 connects to a plurality of the UEs 11.

In order to efficiently provide a multicast packet service or a broadcast packet service, logical channels MTCH (MBMS point-to-multipoint Traffic Channel) and MCCH (MBMS point-to-multipoint Control Channel) of cell section; and a physical channel MICH (MBMS Notification Indicator Channel) have been newly introduced (e.g., Non-Patent Document 1). Herein, MTCH is a channel to transmit data, MCCH is a channel to transmit control information, and MICH is a channel to transmit a signal notifying that control information is transmitted.

In a communication method used in a multicast packet service or a broadcast packet service, a plurality of receivers exist with respect to a transmitter. More specifically, in the multicast packet service or the broadcast packet service, an RNC generates MICH data, MCCH data, and MTCH data and transmits those data to Node B. Node B that has received the MICH data and MCCH data consecutively transmits the MICH data and MCCH data received and MTCH data to a plurality of UEs. At this time, each UE monitors the MICH to determine whether information addressed to the UE is transmitted. If the UE determines that information addressed to the UE is transmitted, the UE checks control information of the MCCH so as to refer to the actually transmitted information. Furthermore, the UE obtains data from the MTCH if the transmitted information is desired one. In this case, the UE needs to monitor only the MICH at first, so that power consumption in the UE can be reduced.

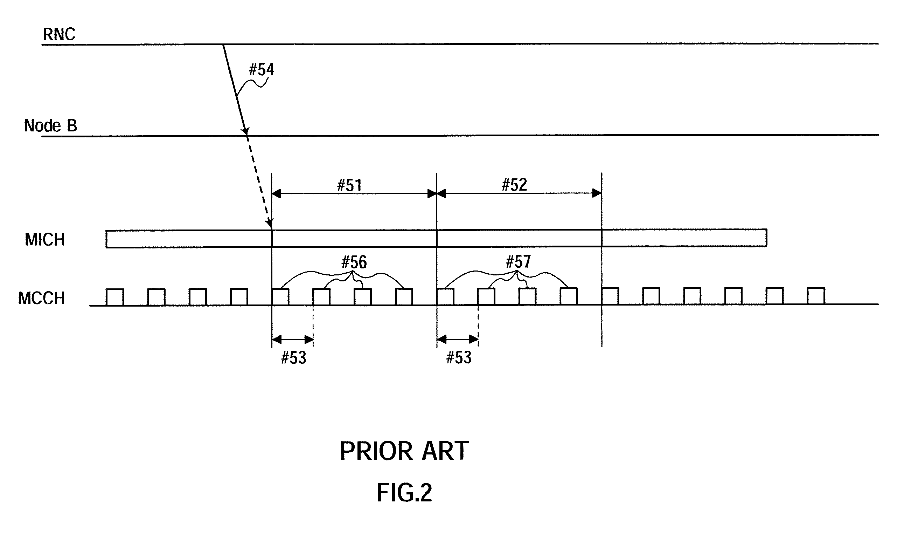

As shown in FIG.2, RNC sets predetermined transmission periods called modification periods #51 and #52 and transmits a transmission signal of each channel to Node B. Also, RNC transmits MICH data #54 to Node B only once at the first timing of the predetermined modification period #51.

Node B sets a predetermined transmission period called a repetition period #53 in the modification periods #51 and #52, repetition period #53 being shorter than modification period #51 or #52. Then, Node B repeats transmittingMCCH data #56 to the UE in cycles of repetition period #53 in modification period #51, and repeats transmitting MCCH data #57 to the UE in cycles of repetition period #53 in modification period #52. The MCCH data is updated or modified at the timing of shift from modification period #51 to modification period #52. The UE can know that the MCCH data has been updated by monitoring the MICH. Non-patent Document 1: 3GPP TS 23.246 V.6.2.0 (2004-03) Introduction of the Multimedia Broadcast Multicast Service (MBMS) in the Radio Access Network (RAN); Stage 2 (Release 6)

### Disclosure of Invention

### Problems to be Solved by the Invention

However, with the known control station apparatus and base station apparatus, the following problem occurs: if a modification period is shifted by RNC during communication, Node B does not know the shift of the modification period, and thus Node B that has received a MICH signal from RNC cannot transmit a correct MICH signal to the UE. As a result, the UE cannot recognize start of a new data distribution service and cannot receive the data distribution service.

It is therefore an object of the present invention to provide a control station apparatus and base station apparatus whereby data of each channel can be reliably obtained on the receiving side even if a transmission period is shifted and set.

### Means for Solving the Problem

The control station apparatus according to the present invention employs a configuration having: a transmission period adjusting section that variably sets a transmission period to repeat transmitting the same control information, determines a timing to change the transmission period, and notifies a base station apparatus of timing information, the timing information being information about the timing; and a transmitting section that transmits the control information in the changed transmission period set by the transmission period adjusting section at the timing after the timing information has been notified by the transmission period adjusting section.

The transmitting method according to the present invention includes the steps of: variably setting a transmission period to repeat transmitting the same control information and determining a timing to change the transmission period notifying a base station apparatus of timing information , the timing information being information of the determined timing; and transmitting the control information in the changed transmission period set at the timing after the timing information has been notified.

According to this method, after the base station apparatus has been notified of information about the timing to shift the transmission period to repeat transmitting the control information, the control information is transmitted to the base station apparatus in the shifted transmission period. Consequently, the base station apparatus can know the timing of shift of the transmission period to transmit the control information by the timing information, so that the receiving side can accurately detect the transmission of the control information is transmitted.

### Advantageous Effect of the Invention

According to the present invention, data of each channel can be reliably obtained on the receiving side even if the transmission period is shifted and set.

### Brief Description of Drawings

FIG.1 shows a configuration of a packet communication system;
FIG.2 shows timing of MICH and MCCH according to a prior art;
FIG.3 is a block diagram showing a configuration of an RNC according to a first embodiment of the present invention;
FIG.4 is a block diagram showing a configuration of Node B according to the first embodiment of the present invention;
FIG.5 is a sequence diagram showing operations of UE, Node B and RNC upon shifting a modification period, according to the first embodiment of the present invention;
FIG.6 shows timing of MICH and MCCH according to the first embodiment of the present invention;
FIG.7 shows a frame configuration of MICH according to the first embodiment of the present invention;
FIG. 8 shows a frame configuration of MCCH according to the first embodiment of the present invention;
FIG.9 shows a protocol configuration of MCCH according to the first embodiment of the present invention;
FIG.10 shows a protocol configuration of MTCH according to the first embodiment of the present invention;
FIG.11 is a block diagram showing a configuration of an RNC according to a second embodiment of the present invention;
FIG.12 is a block diagram showing a configuration of an FP section according to the second embodiment of the present invention;
FIG.13 is a block diagram showing a configuration of an FP section according to the second embodiment of the present invention;
FIG.14 is a flowchart showing an operation of RNC according to the second embodiment of the present invention;
FIG.15 is a flowchart showing an operation of Node B according to the second embodiment of the present invention;
FIG.16 shows timing of MICH and MCCH according to the second embodiment of the present invention;
FIG.17 shows timing of MICH and MCCH according to a third embodiment of the present invention;
FIG.18 is a block diagram showing a configuration of an RNC according to a fourth embodiment of the present invention;
FIG.19 is a block diagram showing a configuration of an Node B according to the fourth embodiment of the present invention;
FIG.20 is a block diagram showing a configuration of an FP section according to the fourth embodiment of the present invention;
FIG.21 is a block diagram showing a configuration of an FP section according to the fourth embodiment of the present invention;
FIG.22 shows timing of MICH and MCCH according to the fourth embodiment of the present invention; and
FIG.23 shows timing of MICH and MCCH according to a fifth embodiment of the present invention.

### Best Mode for Carrying Out the Invention

Now, embodiments of the present invention will be described in detail with reference to the accompanying drawings.

### (First Embodiment)

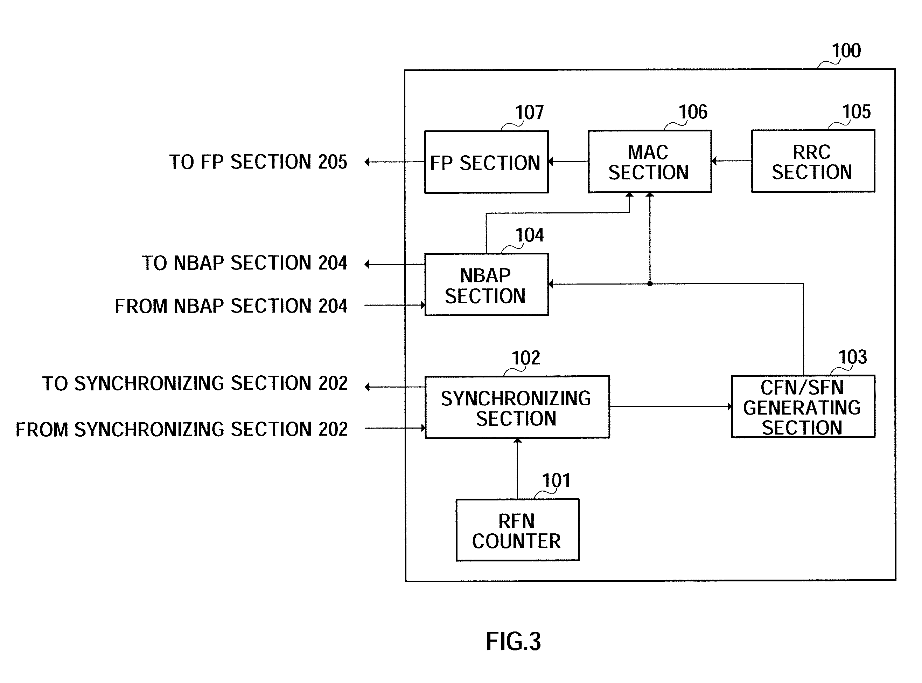

FIG.3 is a block diagram showing a configuration of RNC 100 according to a first embodiment of the present invention.

RFN counter 101, serving as a first counter, generates an RFN counter value, which is incremented by "1" at predetermined intervals, and outputs RFN counter value to synchronizing section 102.

Synchronizing section 102, serving as differential calculating means, transmits information of RFN counter value received from RFN counter 101 to Node B (described below), outputs the information to a CFN/SFN generating section 103, calculates a differential between a BFN counter value and RFN counter value based on the information of RFN counter value transmitted to Node B and information of the BFN counter value received from Node B, and outputs information of the calculated differential to CFN/SFN generating section 103.

CFN/SFN generating section 103 generates information of a CFN counter value and SFN counter value based on the information of the differential received from synchronizing section 102 and the information of RFN counter value, and outputs the generated information to NBAP section 104 and MAC section 106. Note that, the SFN counter value, the CFN counter value, and the BFN counter value are the same value. RFN, CFN, BFN and SFN are signals used in timing control for data transfer among the UE, Node B and RNC.

NBAP section 104, serving as transmission period adjusting means, variably sets a modification period (transmission period) and determines the timing to shift the modification period based on the information of the CFN and SFN counter values received from CFN/SFN generating section 103. Also, NBAP section 104 transmits the determined timing to shift the modification period to Node B as activation time information and outputs the determined timing to MAC section 106. Then, NBAP section 104 outputs a response signal to the activation time information received from Node B, to MAC section 106.

RRC section 105 generates MICH data, MCCH data, and MTCH data and outputs these data to MAC section 106.

MAC section 106 performs scheduling so as to transmit the MICH data and MCCH data received from the RRC section 105 at the first timing of the modification period. After performing the scheduling, MAC section 106 outputs the MICH data and MCCH data to FP section 107. If MAC section 106 receives a response signal to the activation time information from NBAP section 104, MAC section 106 performs scheduling based on a shifted modification period for the MICH data and MCCH data that are received from RRC section 105 and that are transmitted from Node B to the UE after the activation time, and then outputs the data to FP section 107. At this time, MAC section 106 outputs the information of the CFN counter, which has been received from CFN/SFN generating section 103 and which indicates the timing to shift the modification period, to FP section 107 together with the MICH data and MCCH data before shift of the modification period.

FP section 107, serving as transmitting means, assembles the MICH data, MCCH data, and MTCH data received from MAC section 106 into an MICH data frame, MCCH data frame, and MTCH data frame, respectively, and transmits these data frames to Node B. FP section 107 may transmit the MCCH data to Node B once or a plurality of times in an arbitrary modification period, may transmit the MCCH data to Node B once per modification period, or may repeat transmitting the same MCCH data to Node B in predetermined cycles per modification period.

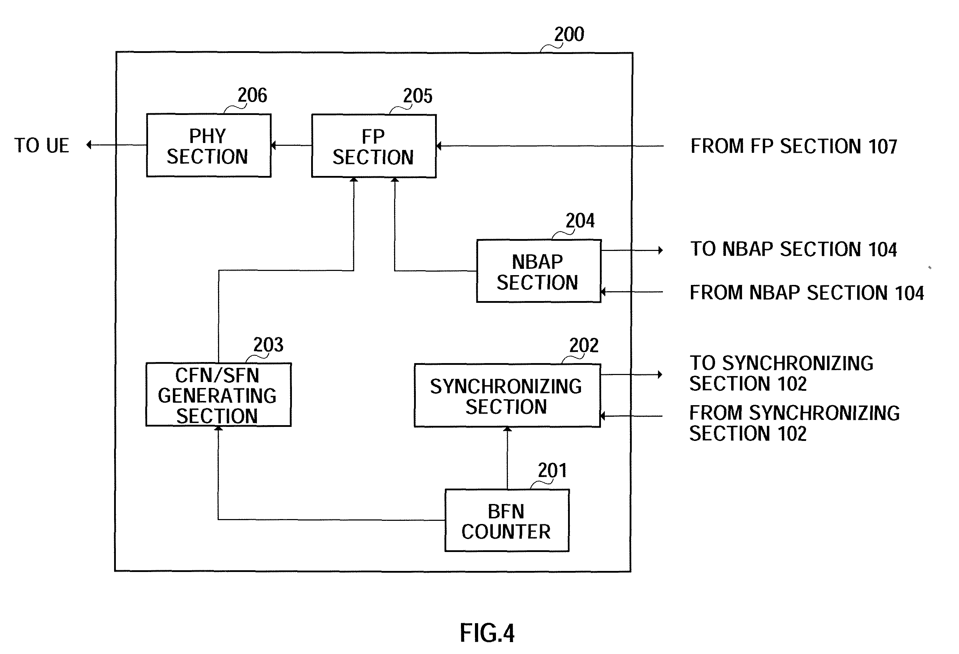

Next, the configuration of Node B 200 will be described with reference to FIG.4. FIG.4 is a block diagram showing the configuration of Node B 200.

BFN counter 201, serving as a second counter, generates a BFN counter value, which is incremented by "1" at predetermined intervals, and outputs information of the BFN counter value to synchronizing section 202 and CFN/SFN generating section 203.

When receiving the information of RFN counter value from synchronizing section 102 of RNC 100, synchronizing section 202 stores the information of RFN counter value, and transmits the information of the BFN counter value received from BFN counter 201 to synchronizing section 102 of RNC 100 at the timing of receiving the information of RFN counter value.

CFN/SFN generating section 203 generates information of a CFN counter value and information of an SFN counter value based on the information of the BFN counter value received from BFN counter 201 and outputs the generated information to FP section 205.

NBAP section 204 outputs the activation time information received from NBAP section 104 of RNC 100 to FP section 205 and transmits a response signal to the activation time information to NBAP section 104 of RNC 100.

FP section 205, serving as transmission period shifting means, outputs MICH data to PHY section 206 at a predetermined timing. Also, FP section 205 duplicates the same MCCH data and repeat outputting the data to PHY section 206 ineachmodificationperiod. Also, FP section 205 performs processing based on the shifted modification period on the MICH data frame, MCCH data frame, and MTCH data frame that are received from FP section 107 of RNC 100 and that are transmitted at or after the time indicated by the activation time information received from NBAP section 204, and then outputs the data frames to PHY section 206.

PHY section 206 performs a process of layer 1 on the MICH data, MCCH data, and MTCH data received from FP section 205 and transmits the data to the UE.

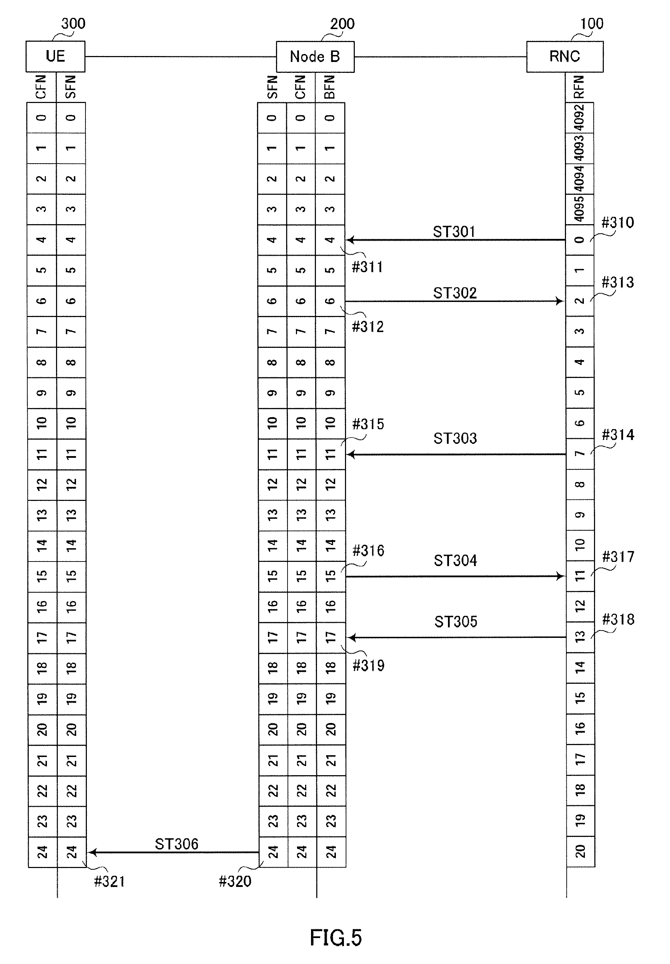

Next, the operation of shifting a modification period performed by the UE, Node B and RNC will be described with reference to FIG.5. FIG.5 is a sequence diagram showing the operation of UE, Node B, and RNC upon shifting a modification period.

Synchronizing section 102 of RNC 100 transmits information of RFN counter value "0" #310 received from RFN counter 101 to Node B 200 (step ST301). Synchronizing section 202 of Node B 200 receives the information of RFN counter value "0" #310 at the timing of BFN counter value "4" #311. Then, synchronizing section 202 of Node B 200 that has received the information of RFN counter value "0" #310 transmits information of BFN counter value "6" #312 to RNC 100 at the timing of the BFN counter value "6" #312 received from BFN counter 201 after receiving the information of RFN counter value "0" #310 (step ST302).

Then, synchronizing section 102 of RNC 100 that has received the information of the BFN counter value "6" #312 synchronizes RFN counter value and the BFN counter value based on the received BFN counter value "6" #312 and RFN counter value "2" #313 received from RFN counter 101 at the timing of receiving BFN counter value "6" #312. More specifically, synchronizing section 102 subtracts RFN counter value "2" #313 received from RFN counter 101 at the timing of receiving the BFN counter value "6" #312 from the received BFN counter value "6" #312, so that synchronizing section 102 can know that the subtraction result "4" is the differential between the RFN counter value and the BFN counter value, and, by this means, is able to synchronize the BFN counter and the RFN counter.

Then, CFN/SFN generating section 103 of RNC 100 generates information indicating that the CFN counter value and the SFN counter value are larger by "4" than the RFN counter value. Since the CFN counter value and the SFN counter value are larger by "4" than the RFN counter value, NBAP section 104 determines the time to shift the modification period so that the timing to transmit MICH data and MCCH data after shift of the modification period is at a value that is at least larger by "4" than the present RFN counter value. Then, NBAP section 104 transmits activation time information to make the shifted modification period effective to Node B 200 at the timing of RNC counter value "7" #314 (step ST303). Then, Node B 200 that received the activation information at BFN counter value "11" #315 stores the received activation time information and transmits a response signal to RNC 100 at the timing of BFN counter value "15" #316 (step ST304). RNC 100 receives the response signal at RFN counter value 11 #317.

In a case where the timing to transmit MICH data and MCCH data from Node B 200 to UE 300 is determined by RNC after the modification period has been shifted, if the present RFN counter value is "13" #318, NBAP section 104 adds "4" to RFN counter value "13" and makes the SFN counter value and CFN counter value of "17" or more the activation time information. For example, in FIG.5, the SFN counter value and the CFN counter value "24" are transmitted as activation time information to Node B 200 (step ST305).

Then, RNC 100 that has received the response signal determines that Node B 200 can shift the modification period at the SFN counter value "24" and the CFN counter value "24," and transmits the MICH data and MCCH data in which the modification period has been shifted to Node B 200 at RFN counter value "13" #318 before RFN counter value "20" (step ST305). Node B 200 receives the MICH data and MCCH data in which the modification period has been shifted at the BFN counter value "17" #319.

Then, Node B 200 that received the MICH data and MCCH data that have been transmitted by shifting the modification period transmits the MICH data and MCCH data in which the modification period was shifted to UE 300 at the timing of the SFN counter value "24" and CFN counter value "24" #320 specified by RNC 100 (step ST306). UE 300 receives the MICH data and MCCH data in which the modification period was shifted at the SFN counter value "24" #321.

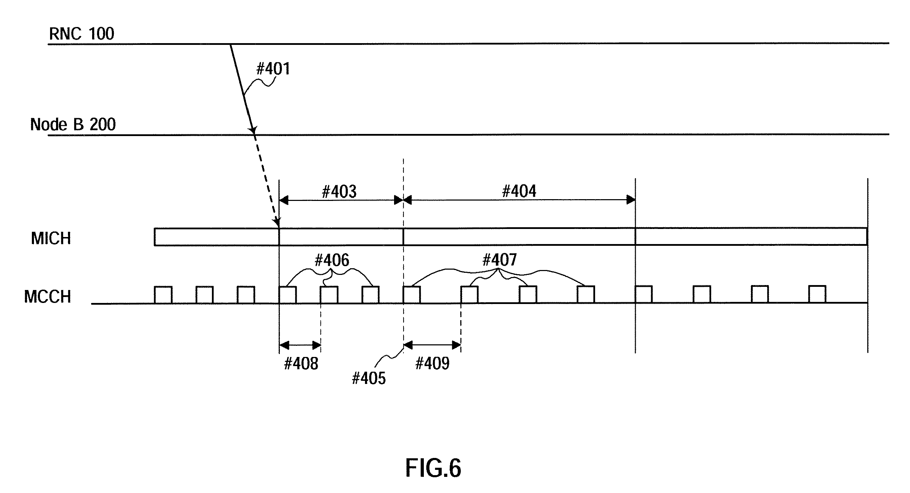

FIG.6 shows timing of MICH and MCCH. As shown in FIG.6, MICH data #401 is transmitted from RNC 100 to Node B 200 at a predetermined timing. Also, MCCH data (not shown) is transmitted from RNC 100 to Node B 200. Node B 200 that received the MICH data #401 transmits the MICH data #401 to UE 300 at the first timing of modification period #403. Also, Node B repeat transmitting MCCH data #406 to UE 300 in cycles of repetition period #408 in modification period #403, and repeats transmitting MCCH data #407 different from MCCH data #406 to UE 300 in cycles of repetition period #409 in modification period #404. In FIG.6, MCCH data #406 that is repeatedly transmitted in modification period #403 and MCCH data #407 that is repeatedly transmitted in modification period #404 indicate the timing to transmit the MCCH data from Node B 200 to UE 300.

Modification period#403 and modification period #404, which has a different length from that of modification period #403, are set in the MICH. RNC 100 notifies Node B 200 and UE 300 of a timing #405 of shift from modification period #403 to modification period #404 by using activation time information. Repetition period #408 and repetition period #409 differ in length. The shift from repetition period #408 to repetition period #409 occurs at the same timing as timing #405 of the shift from modification period #403 to modification period #404. Consequently, by providing a notification about timing #405 of the shift from modification period #403 to modification period #404 in activation time information, RNC 100 also provides a notification about the shift from repetition period #408 to repetition period #409.

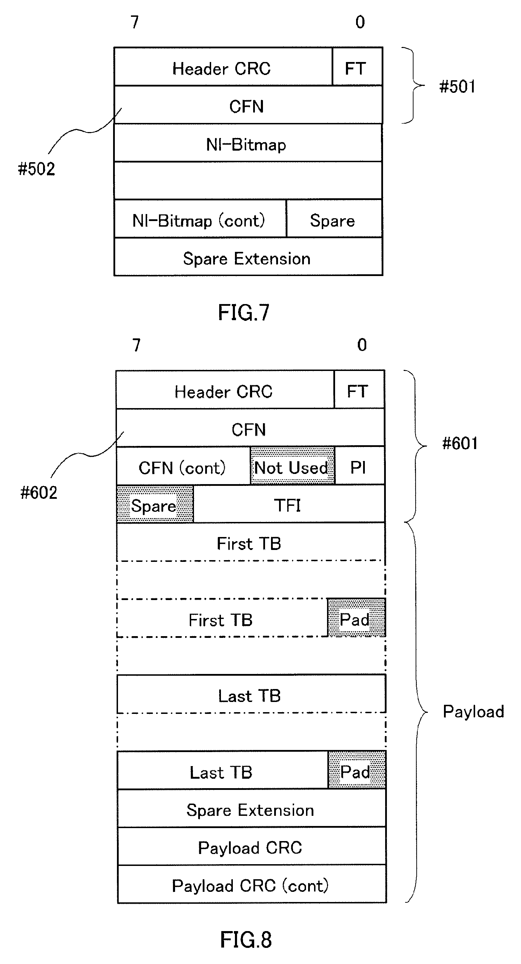

FIG.7 shows a frame configuration of MICH data. As shown in FIG.7, the timing when Node B 200 transmits the MICH data to UE 300 is determined by CFN, which is set in CFN field #502 in header section #501 of the MICH frame. Thus, if Node B 200 receives MICH data in which the same CFN as the CFN counter value that is previously transmitted from RNC 100 and that indicates the timing to shift the modification period is set in CFN field #502, Node B 200 performs processing in accordance with the modification period after the shift and transmits the MICH data to UE 300.

FIG.8 shows a frame configuration of MCCH data. As shown in FIG.8, the timing when Node B 200 transmits the MCCH data to UE 300 is determined by CFN, which is set in CFN field #602 in header section #601 of the MCCH frame. Thus, if Node B 200 receives MCCH data in which the same CFN as the CFN counter value that is previously transmitted from RNC 100 and that indicates the timing to shift the modification period is set in CFN field #602, Node B 200 performs processing in accordance with the modification period after shift and transmits the MCCH data to UE 300.

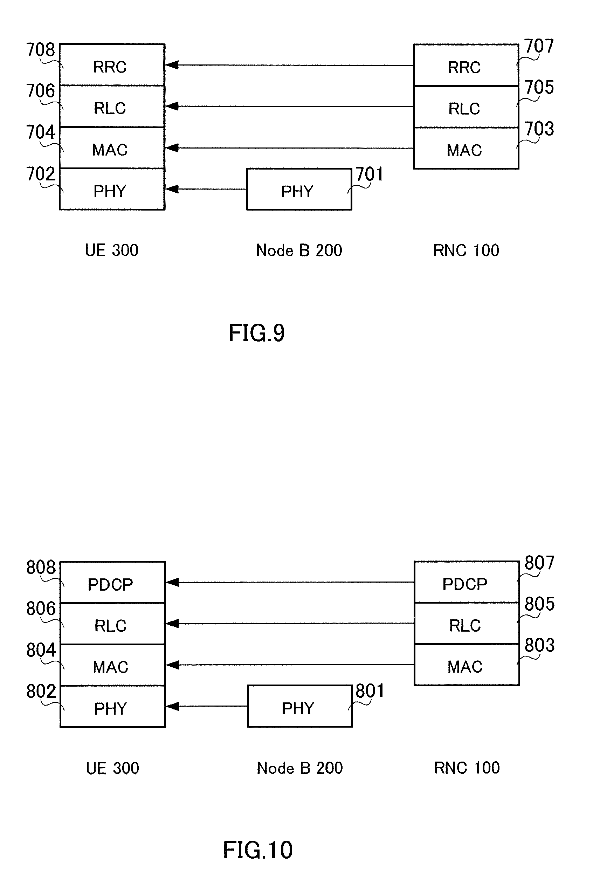

FIG.9 shows a protocol configuration of MCCH. As shown in FIG.9, PHY 701 of Node B 200 and PHY 702 of UE 300 perform processing for radio transmission. MAC 703 of RNC 100 and MAC 704 of UE 300 perform processing related to scheduling. RLC 705 of RNC 100 and RLC 706 of UE 300 perform processing for retransmission. RRC 707 of RNC 100 and RRC 708 of UE 300 perform management of radio resources.

FIG.10 shows a protocol configuration of MTCH. As shown in FIG.10, PHY 801 of Node B 200 and PHY 802 of UE 300 perform processing for radio transmission. MAC 803 of RNC 100 and MAC 804 of UE 300 perform processing related to scheduling. RLC 805 of RNC 100 and RLC 806 of UE 300 perform processing for retransmission. PDCP 807 of RNC 100 and PDCP 808 of UE 300 perform compression processing and decompression processing for packets.

As described above, according to the first embodiment, if a modification period is shifted, RNC transmits activation time information indicating the timing to shift the modification period to Node B, and then transmits MICH data and MCCH data of the shifted modification period at the timing notified in the activation time information. Consequently, data of each channel can be reliably obtained on the receiving side even if the transmission period is shifted and set. Also, according to the first embodiment, the UE can determine whether necessaryMCCH data addressed to the UE has arrived by monitoring MICH data, so that power consumption of the UE can be reduced. Also, according to the first embodiment, after counter values of Node B and RNC are synchronized, notification about a shift of a transmission period can be provided using the counter values, so that the control station apparatus can easily and reliably notify the base station apparatus of the timing of shift of the transmission period.

### (Second Embodiment)

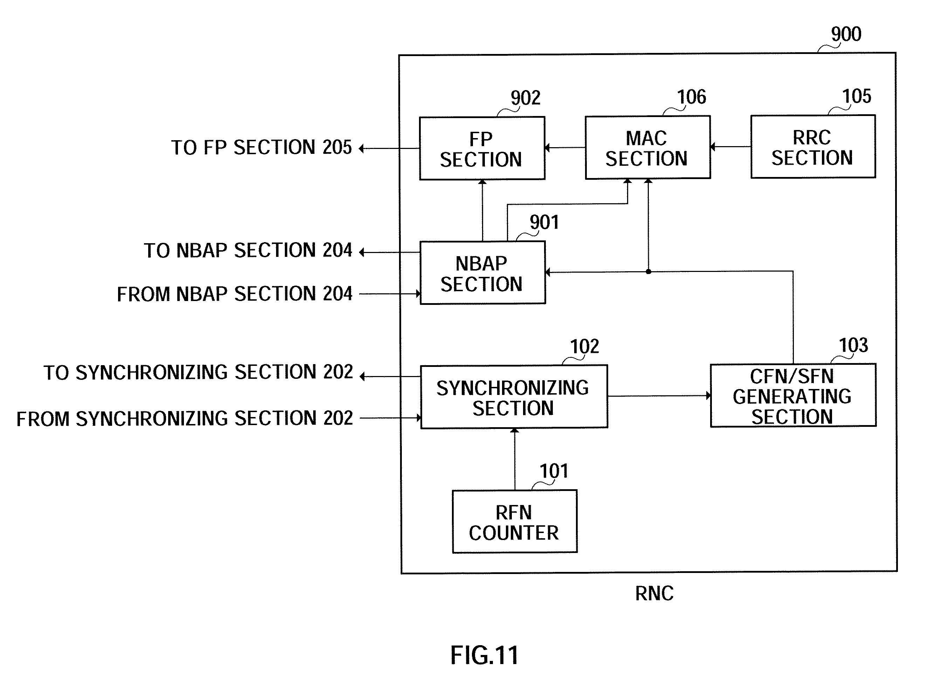

FIG.11 is a block diagram showing a configuration of RNC 900 according to a second embodiment of the present invention.

As shown in FIG.11, compared with RNC 100 according to the first embodiment shown in FIG.3, RNC 900 according to the second embodiment includes NBAP section 901 instead of NBAP section 104 and FP section 902 instead of FP section 107. In FIG.11, the parts that are the same as those in FIG.3 are assigned the same reference numerals and the descriptions thereof will be omitted. The configuration of Node B in the second embodiment is the same as that shown in FIG.4, and thus the description thereof will be omitted.

NBAP section 901 sets the modification period and determines the timing to shift the modification period based on information of a CFN counter value and SFN counter value received from CFN/SFN generating section 103. Then, NBAP section 901 transmits the determined timing to shift the modification period as activation time information to Node B and also outputs the information to MAC section 106. Then, NBAP section 901 outputs a response signal to the activation time information received from Node B to MAC section 106. Also, NBAP section 901 outputs information of the set modification period to FP section 902.

FP section 902 assembles MICH data, MCCH data, and MTCH data received from MAC section 106 into an MICh data frame, MCCH data frame, and MTCH data frame, respectively. Then, FP section 902 transmits the MCCH data and the MICH data to Node B at a predetermined timing. More specifically, FP section 902 calculates the cycle for transmitting MICH data based on the information about the modification period received from NBAP section 901 so that the MICH data can be transmitted a plurality of times per modification period, and transmits the MICH data a plurality of times in the calculated cycle. FP section 902 may transmit the MCCH data to Node B once or a plurality of times in an arbitrary modi fi cat ion period, may transmit the MCCH data to Node B once per modification period, or may repeat transmitting the same MCCH data in predetermined cycles per modification period.

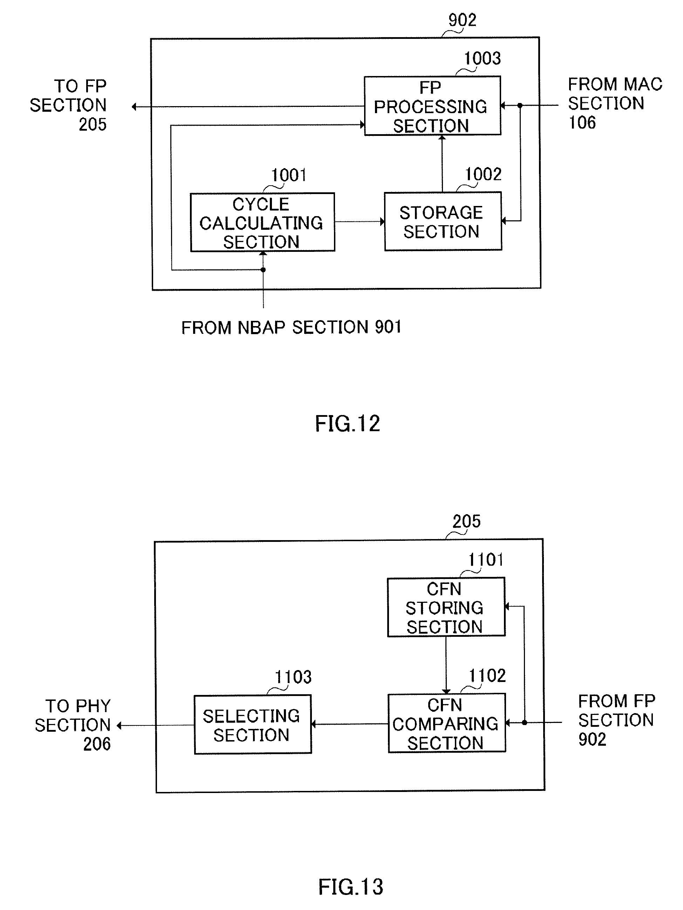

Next, a specific configuration of FP section 902 is described with reference to FIG. 12. FIG. 12 is a block diagram showing the configuration of FP section 902.

Cycle calculating section 1001 calculates a transmission cycle of MICH data per modification period based on the information of modification period received from NBAP section 901 and information of the number of transmissions of MICH data in each modification period that is set in advance. Then, cycle calculating section 1001 instructs storage section 1002 to output the MICH data in the calculated cycle. In this case, cycle calculating section 1001 sets a cycle so that data is continuously transmitted at the first timing of each modification period.

Storage section 1002 stores the MICH data received from MAC section 106 and outputs the stored MICH data to FP processing section 1003 in predetermined cycles in accordance with the instructions from cycle calculating section 1001.

FP processing section 1003 assembles the MICH data received from MAC section 106 into an MICH data frame, assembles MCCH data into an MCCH data frame, and transmits these data frames to Node B 200. Furthermore, FP processing section 1003 assembles the MICH data received from storage section 1002 into an MICH data frame based on the information of the modification period received from NBAP section 901 and transmits the MICH data frame to Node B 200 until the modification period ends. By this means, FP processing section 1003 transmits the MICH data to Node B 200 a plurality of times in each modification period.

Next, a specific configuration of FP section 205, serving as selecting means, is described with reference to FIG.13. FIG.13 is a block diagram showing the configuration of FP section 205.

CFN storing section 1101 stores CFN set in the MICH data received from RNC 900. Then, CFN storing section 1101 outputs information of stored CFN of each modification period to a CFN comparing section 1102. CFN storing section 1101 updates the stored CFN in each modification period.

CFN comparing section 1102 compares the CFN set in the MICH data received from RNC 900 with information of the CFN received from CFN storing section 1101 and outputs information of a comparison result together with the MICH data to selecting section 1103. If CFN comparing section 1102 receives MCCH data and MTCH data from RNC 900, CFN comparing section 1102 outputs the data to selecting section 1103 without comparing CFNs.

If the comparison result received from CFN comparing section 1102 indicates that the CFNs do not match, selecting section 1103 outputs the MICH data received from CFN comparing section 1102 to PHY section 206. If the comparison result indicates that the CFNs match, selecting section 1103 does not output the MICH data received from CFN comparing section 1102 to PHY section 206 but discards the MICH data. Also, if selecting section 1103 receives MCCH data and MTCH data from CFN comparing section 1102, selecting section 1103 outputs the data to PHY section 206.

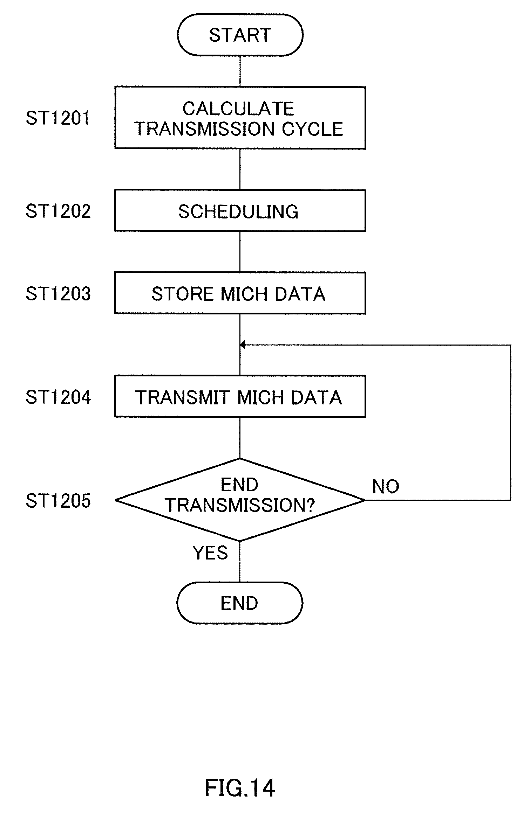

Next, the operation of RNC 900 upon transmitting MICH data will be described with reference to FIG.14. FIG.14 is a flowchart showing the operation of RNC 900 upon transmitting MICH data. First, FP section 902 calculates a transmission cycle of MICH data in each modification period based on information of modification periods and information of the number of transmissions in each modification period set in advance (step ST1201).

Then, MAC section 106 performs scheduling for transmission of MICH data (step ST1202). Then, FPsection 902 stores MICH data (step ST1203) and transmits the MICH data (step ST1204). Then, FP section 902 determines whether or not the transmission has ended (step ST1205). That is, FP section 902 determines whether MICH data has been transmitted a predetermined number of times in the cycle calculated per modification period.

If transmission has not ended, FP section 902 repeats transmitting the stored MICh data (step ST1204). On the other hand, if transmission has ended, FP section 902 ends the transmission of MICH data.

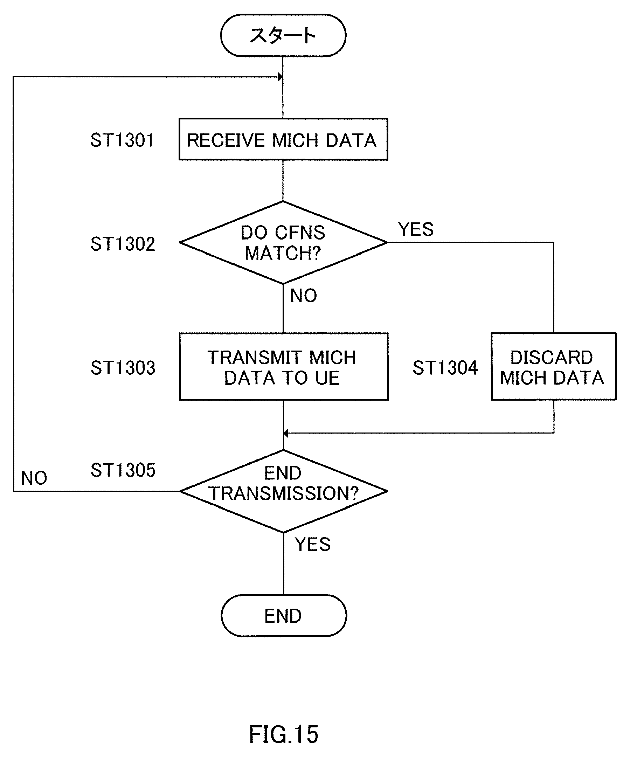

Next, the operation of Node B 200 upon receiving MICH data will be described with reference to FIG.15. FIG.15 is a flowchart showing the operation of Node B 200 upon receiving MICH data. First, FP section 205 receives MICH data (step ST1301). Then, FP section 205 determines whether the CFN of the received MICH data matches with the CFN of the MICH data that was received earlier in the same modification period (step ST1302).

If the CFNs of the MICH data do not match, PHY section 206 transmits the MICH data to the UE (step ST1303). On the other hand, if the CFNs of the MICH data match, FP section 205 discards the MICH data having matching CFNs (step ST1304).

Then, Node B 200 determines whether or not to end the transmission to the UE (step ST1305). Node B 200 repeats the processing of steps ST1301 to ST1305 when not ending the transmission and ends the transmission when ending the transmission.

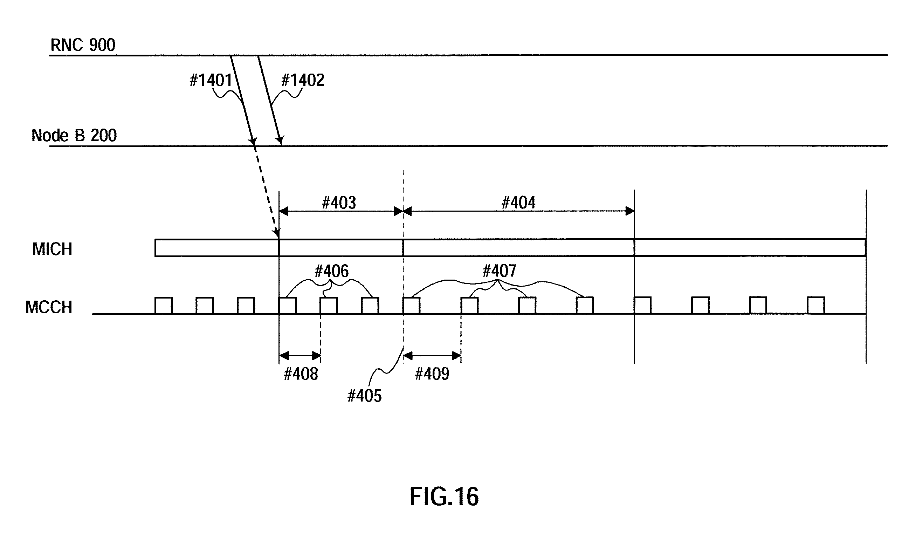

FIG.16 shows timing of MICH and MCCH. FIG.16 is different from FIG.6 in that MICH data #1401 and #1402 are transmitted twice in modification period #403. The other timings are the same as those in FIG.6. The same timings are assigned the same reference numerals as in FIG.6 and the descriptions thereof will be omitted.

As shown in FIG.16, FP section 902 of RNC 900 consecutively transmits the same MICH data #1401 and #1402 twice to Node B 200 from the beginning of modification period #403. At this time, Node B 200 that has received MICH data #1401 and #1402 has received MICH data #1401 without losing it during transmission, and thus Node B 200 transmits MICH data #1401 received the first time to the UE and discards MICH data #1402 received the second time. If MICH data #1401 is lost while being transmitted from RNC 900 to Node B 200, Node B 200 transmits MICH data #1402 to the UE.

As described above, in addition to the advantage of the first embodiment, according to the second embodiment, MICH data is transmitted a plurality of times, thereby preventing a state where MICH data cannot be received at all due to loss of MICH data during transmission. Also, according to the second embodiment, if Node B receives the same MICH data a plurality of times, Node B selects one MICH data and transmits it to the UE. The UE performs processing such as decoding after receiving MICH data only once, so that increase in power consumption of the UE can be prevented.

In the second embodiment, MICH data is transmitted twice. However, the present invention is not limited to this, and the number of transmissions can be arbitrarily set as long as it is twice or more. In the second embodiment, MICH data is transmitted twice in the same modification period. However, the present invention is not limited to this, and, if Node B transmits MCCH data to the UE at the same timing as MICH data, the MCCH data may be transmitted twice in the same modification period. In the second embodiment, Node B discards the MICH data received the second time in the same modification period. However, the present invention is not limited to this, and Node B may transmit all of the received MICH data to the UE.

### (Third Embodiment)

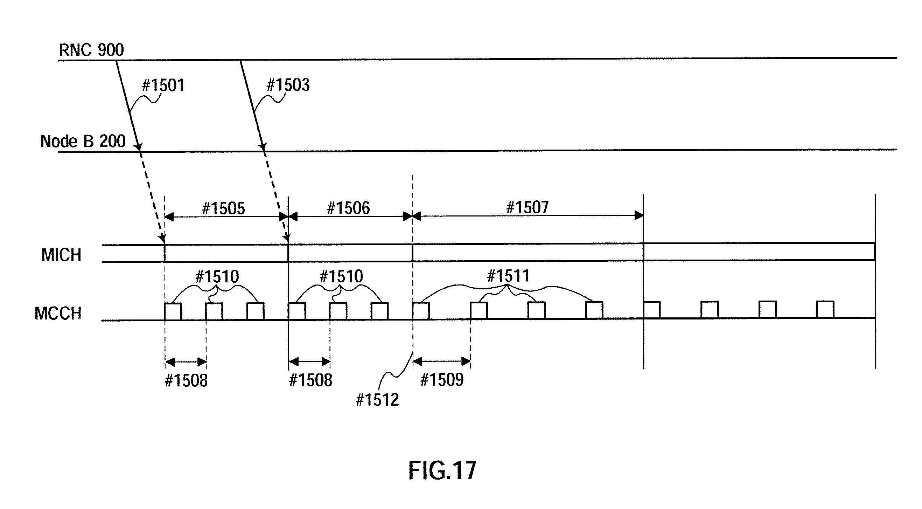

FIG.17 shows timing of MICH and MCCH according to a third embodiment of the present invention. In the third embodiment, the configuration of RNC is the same as in FIG.11 and the configuration of Node B is the same as in FIG.4, and thus the corresponding descriptions will be omitted. In FIG. 17, MCCH data #1510 that is repeatedly transmitted in modification periods #1505 and #1506 and MCCH data #1511 that is repeatedly transmitted in modification period #1507 indicate the timing to transmit MCCH data from Node B 200 to UE 300.

Referring to FIG.17, MICH data #1501 and #1503 are transmitted from RNC 900 to Node B 200. Also, MCCH data (not shown) is transmitted from RNC 900 to Node B 200. Node B 200 that has received MICH data #1501 transmits MICH data #1501 to UE 300 at the first timing in modification period #1505. Furthermore, Node B 200 that has received MICH data #1503 transmits MICH data #1503 to UE 300 at the first timing in modification period #1506. Node B repeats transmitting MCCH data #1510 to UE 300 in cycles of repetitionperiod #1508 inmodification periods #1505 and #1506, and repeats transmitting MCCH data #1511 that is different from MCCH data #1510 to UE 300 in cycles of repetition period #1509 in modification period #1507.

In MICH, the same modification period #1505 and modification period #1506 are set, and modification period #1507 having a different length from modification period #1505 and modification period #1506 is also set. RNC 900 notifies Node B 200 and UE 300 of timing #1512 of shift from modification period #1506 to modification period #1507 using activation time information. Repetition period #1508 and repetition period #1509 differ in length.

Repetition period #1508 shifts to repetition period #1509 the same timing as timing #1512 of the shift from modification period #1506 to modification period #1507. Consequently, by providing a notification about timing #1512 of the shift from modification period #1506 to modification period #1507 in activation time information, RNC 900 also provides a notification about the shift from repetition period #1508 to repetition period #1509.

Since Node B 200 has received MICH data #1501 without losing it during transmission, Node B 200 discards MICH data #1503 received the second time. Then, Node B 200 transmits MICH data #1501 to UE 300 at the first timing of modification period #1505. Also, Node B 200 repeats transmitting MCCH data #1510 to UE 300 in cycles of repetition period #1508 in modification periods #1505 and #1506, and repeats transmitting MCCH data #1511 that is different from MCCH data #1510, to UE 300 in cycles of repetition period #1509 in modification period #1507. If MICH data #1501 is lost while being transmitted from RNC 900 to Node B 200, MICH data #1503 is transmitted to UE 300.

As described above, in addition to the advantage of the first embodiment, according to the third embodiment, a plurality of consecutive modification periods to transmit MICH data are set and the MICH data is transmitted in each of the plurality of modification periods set, thereby preventing a state where MICH data cannot be received at all due to loss of MICH data during transmission. Also, according to the third embodiment, if Node B receives MICH data notifying the same MCCH data a plurality of times, Node B selects only one MICH data and transmits the selected MICH data to the UE. The UE performs processing such as decoding by receiving the MICH data only once, so that increase in power consumption of the UE can be prevented.

In the third embodiment, two consecutive modification periods to transmit MICH data are set. However, the present invention is not limited to this, and an arbitrary number of consecutive modification periods can be set as long as the number is two or more. In the third embodiment, the MICH data is transmitted in each consecutive modification period. However, the present invention is not limited to this, and, if Node B transmits MCCH data to the UE at the same timing as MICH data, the MCCH data may be transmitted in each consecutive modification period. Also, in the third embodiment, Node B discards the MICH data received the second time in the consecutive modification periods. However, the present invention is not limited to this, and Node B may transmit all of received MICH data to the UE.

### (Fourth Embodiment)

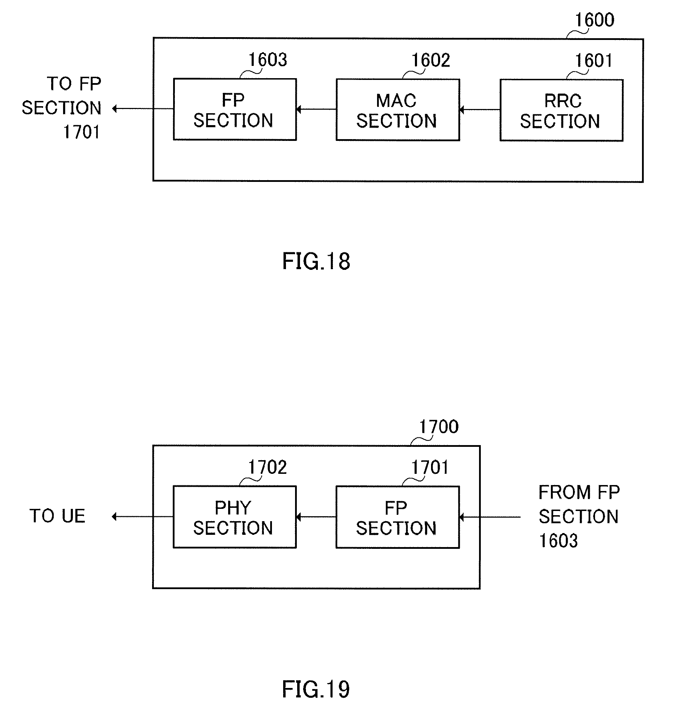

FIG.18 is a block diagram showing a configuration of RNC 1600 according to a fourth embodiment of the present invention.

RRC section 1601 generates MICH data, MCCH data, and MTCH data and outputs these data to MAC section 1602.

MAC section 1602 performs scheduling for the MICH data, MCCH data, and MTCH data received from the RRC section 1601. Then, after the scheduling, MAC section 1602 outputs the MICH data, MCCH data, and MTCH data to FP section 1603. At this time, MAC section 1602 performs scheduling so that MICH data is transmitted twice in the same modification period.

FP section 1603 assembles the MICH data, MCCH data and MTCH data received from MAC section 1602 into an MICH data frame, an MCCH data frame, and an MTCH data frame, and transmits them to Node B. Furthermore, FP section 1603 transmits the MICH data to Node B a plurality of times in the same modification period. FP section 1603 may transmit the MCCH data to Node B once or a plurality of times in an arbitrarymodificationperiod, may transmit the MCCH data to Node B once in each modification period, or may repeat transmitting the same MCCH data to Node B in predetermined cycles in each modification period.

Next, the configuration of Node B 1700 will be described with reference to FIG.19. FIG.19 is a block diagram showing the configuration of Node B 1700.

FP section 1701 performs processing based on the modification period on the MICH data frame, MCCH data frame, and MTCH data frame received from RNC, and outputs the results to PHY section 1702. At this time, if FP section 1701 receives the same MICH data frame a plurality of times, FP section 1701 selects one of the same MICH data frames and discards the unselected MICH data frames.

PHY section 1702 performs the processing of layer 1 on the MICH data, MCCH data, and MTCH data received from FP section 1701, and transmits the results to the UE.

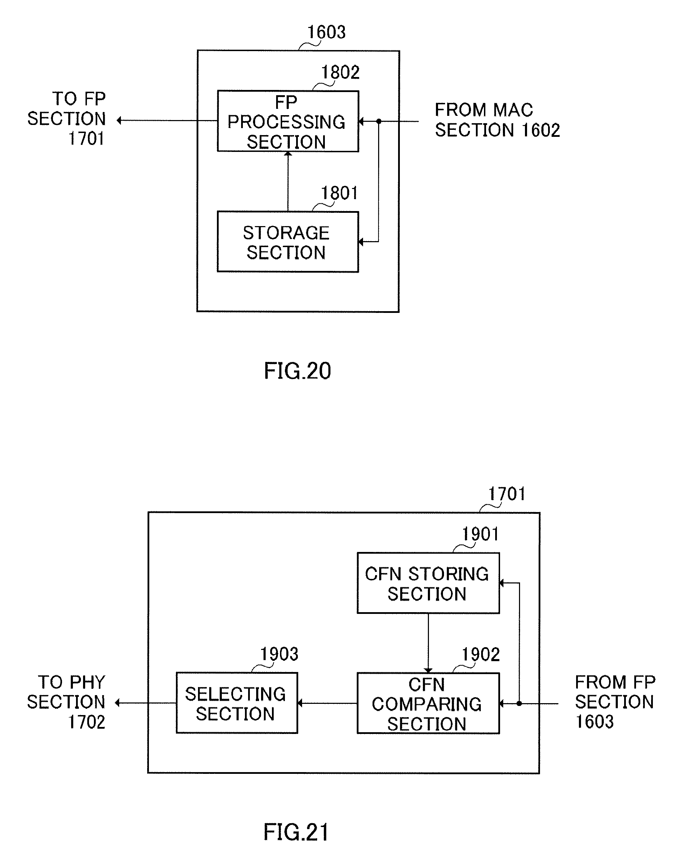

Next, a specific configuration of FP section 1603 will be described with reference to FIG.20. FIG.20 is a block diagram showing the configuration of FP section 1603.

Storage section 1801 stores MICH data received from MAC section 1602 and outputs the stored MICH data to FP processing section 1802 in predetermined cycles.

FP processing section 1802 assembles the MICH data received from MAC section 1602 into an MICH data frame, assembles MCCH data into an MCCH data frame, assembles MTCH data into an MTCH data frame, and transmits these data frames to Node B 200. Also, FP processing section 1802 assembles the MICH data received from storage section 1801 into an MICH data frame in accordance with the number of transmissions of MICH data, and transmits the MICH data frame to Node B 1700. Accordingly, FP processing section 1802 transmits MICH data to Node B 1700 a plurality of times in the same modification period.

Next, a specific configuration of FP section 1701 will be described with reference to FIG.21. FIG.21 is a block diagram showing the configuration of FP section 1701.

CFN storing section 1901 stores CFN set in MICH data received from RNC 1600. Then, CFN storing section 1901 outputs information of stored CFN of each modification period, to CFN comparing section 1902. CFN storing section 1901 updates stored CFN in each modification period.

CFN comparing section 1902 compares the CFN set in the MICH data received from RNC 1600 with information of the CFN received from CFN storing section 1901, and outputs information of a comparison result together with the MICH data to selecting section 1903. If CFN comparing section 1902 receives MCCH data and MTCH data from RNC 1600, CFN comparing section 1902 outputs the data to selecting section 1903 without comparing the CFNs.

From the information of the comparison result received from CFN comparing section 1902, if the CFNs do not match, selecting section 1903 outputs the MICH data received from CFN comparing section 1902 to PHY section 1702. If the CFNs match, selecting section 1903 does not output the MICH data received from CFN comparing section 1902 to PHY section 1702 but discards the MICH data. Also, if selecting section 1903 receives MCCH data and MTCH data from CFN comparing section 1902, selecting section 1903 outputs these data to PHY section 1702 as is.

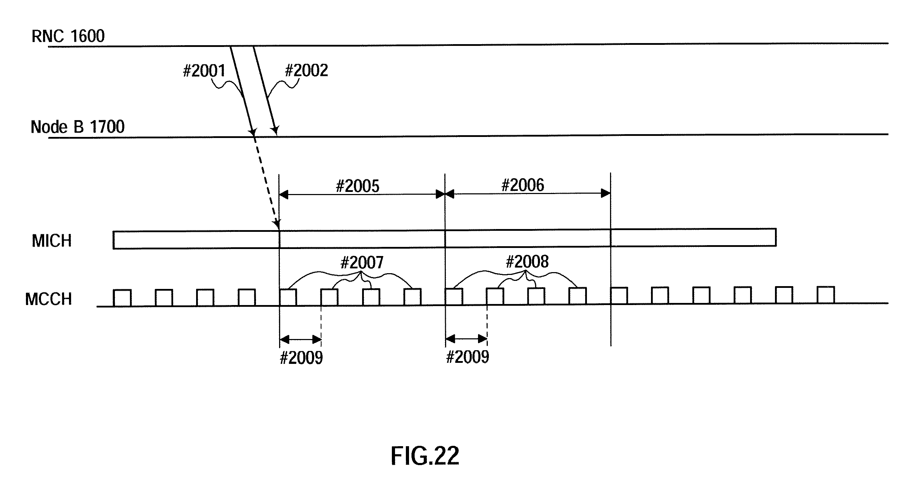

FIG.22 shows timing of MICH and MCCH. As shown in FIG.22, modification periods #2005 and #2006 having the same length are set in MICH. Node B 1700 repeats transmitting MCCH data #2007 to UE 300 in cycles of repetition period #2009 in modification period #2005, and repeats transmitting MCCH data #2008 that is different from MCCH data #2007, to the UE in cycles of repetition period #2009 in modification period #2006. In FIG.22, MCCH data #2007 that is repeatedly transmitted in modification period #2005 and MCCH data #2008 that is repeatedly transmitted in modification period #2006 indicate the timing to transmit MCCH data from Node B 1700 to UE 300.

As shown in FIG.22, FP section 1603 of RNC 1600 transmits the same MICH data #2001 and MICH data #2002 twice to Node B 1700 in modification period #2005. Node B 1700 that has received MICH data #2001 and #2002 has received MICH data #2001 without losing it during transmission, and consequently discards MICH data #2002 received the second time. Then, Node B 1700 transmits MICH data #2001 to UE 300 at the first timing of modification period #2005. If MICH data #2001 is lost during transmission from RNC 1600 to Node B 1700, Node B 1700 transmits MICH data 2002 to UE 300.

As described above, according to the fourth embodiment, MICH data is transmitted a plurality of times, a plurality of consecutive modification periods to transmit MICH data are set and the MICH data is transmitted in each of the plurality of modification periods set, thereby preventing a state where MICH data cannot be received at all due to loss of MICH data during transmission. Also, according to the fourth embodiment, the UE can determine whether necessary MCCH data addressed to the UE has arrived by monitoring MICH data, so that power consumption of the UE can be reduced. Also, according to the fourth embodiment, if Node B receives MICH data indicating the same MCCH data a plurality of times, Node B selects only one MICH data and transmits it to the UE. The UE performs processing such as decoding by receiving MICH data only once, so that increase in power consumption of the UE can be prevented.

In the fourth embodiment, MICH data is transmitted twice. However, the present invention is not limited to this, and the number of transmissions can be arbitrarily set as long as the number is two or more. In the fourth embodiment, MICH data is transmitted twice in the same modification period. However, the present invention is not limited to this, and, if Node B transmits MCCH data to the UE at the same timing as MICH data, the MCCH data may be transmitted twice in the same modification period. In the fourth embodiment, Node B discards the MICH data received the second time in the same modification period. However, the present invention is not limited to this, and Node B may transmit all of the received MICH data to the UE.

### (Fifth Embodiment)

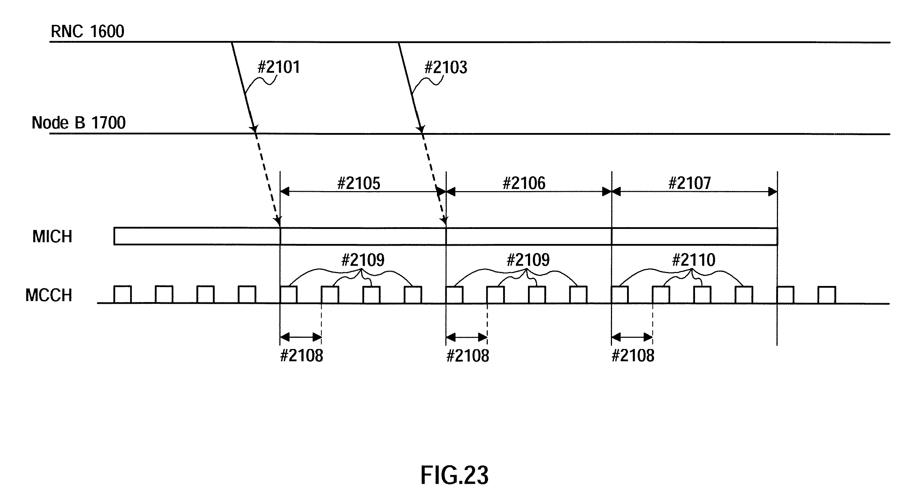

FIG.23 shows timing of MICH and MCCH according to a fifth embodiment of the present invention. In the fifth embodiment, the configuration of RNC is the same as in FIG. 18 and the configuration of Node B is the same as in FIG.19, and thus the corresponding descriptions will be omitted. In FIG.23, MCCH data #2109 that is repeatedly transmitted in modification periods #2105 and #2106 and MCCH data #2110 that is repeatedly transmitted in modification period #2107 indicate the timing to transmit MCCH data from Node B 1700 to UE 300.

As shown in FIG.23, MICH data #2101 and #2103 are transmitted from RNC 1600 to Node B 1700. Also, MCCH data (not shown) is transmitted from RNC 1600 to Node B 1700. Node B 1700 that has received MICH data #2101 transmits MICH data #2101 to UE 300 at the first timing of modification period#2105. Furthermore, Node B 1700 that has received MICH data #2103 transmits MICH data #2103 to UE 300 at the first timing of modification period #2106. In MICH, the same modification periods #2105, #2106 and #2107 are set.

As shown in FIG.23, Node B 1700 repeats transmitting MCCH data #2109 to UE 300 in cycles of repetition period #2108 in modification periods #2105 and #2106, and repeats transmitting MCCH data #2110 that is different from MCCH data #2109, to UE 300 in cycles of repetition period #2108 in modification period #2107. At this time, Node B 1700 that has received MICH data #2101 and #2103 has received MICH data #2101 without losing it during transmission, and thus discards MICH data #2103 received the second time. If MICH data #2101 is lost while being transmitted from RCN 1600 to Node B 1700, Node B 1700 transmits MICH data #2103 to UE 300.

As described above, according to the fifth embodiment, a plurality of consecutive modification periods to transmit MICH data are set and the MICH data is transmitted in each of the plurality of modification periods set, thereby preventing a state where MICH data cannot be received at all due to loss of MICH data during transmission. Also, according to the fifth embodiment, the UE can determine whether necessaryMCCH data addressed to the UE has arrived by monitoring MICH data, so that power consumption of the UE can be reduced. Also, according to the fifth embodiment, if Node B receives MICH data indicating the same MCCH data a plurality of times, Node B selects only one MICH data and transmits it to the UE. The UE performs processing such as decoding by receiving MICH data only once, so that increase in power consumption of the UE can be prevented.

In the fifth embodiment, two consecutive modification periods to transmit MICH data are set. However, the present invention is not limited to this, and an arbitrary number of consecutive modification periods can be set as long as the number is two or more. In the fifth embodiment, the MICH data is transmitted in each consecutive modification period. However, the present invention is not limited to this, and, if Node B transmits MCCH data to the UE at the same timing as MICH data, the MCCH data may be transmitted in each consecutive modification period. Also, in the fifth embodiment, Node B discards the MICH data received the second time in the consecutive modification periods. However, the present invention is not limited to this, and Node B may transmit all of received MICH data to the UE.

The present application is based on Japanese Patent Application No.2004-139119, filed on May 7, 2004, the entire content of which is expressly incorporated herein by reference.

### Industrial Applicability

The control station apparatus and base station apparatus according to the present invention provides an advantage of accurately detecting transmission of control information at the receiving end even when the transmission cycle for transmitting transmission signals is changed, and are therefore useful in changing the transmission cycle.

## Claims

1. A control station apparatus comprising:
a transmission period adjusting section that variably sets a transmission period to repeat transmitting the same control information, determines a timing to change the transmission period, and notifies a base station apparatus of timing information comprising information about the timing; and
a transmitting section that transmits the control information in the changed transmission period set by the transmission period adjusting section at the timing after the timing information has been notified by the transmission period adjusting section.

2. The control station apparatus according to claim 1, further comprising:
a first counter that generates a first counter value to which a constant value is added in a predetermined cycle;
a receiving section that receives count information comprising information of a second counter value to which a constant value is added in a predetermined cycle, and which is generated by a second counter provided in the base station apparatus; and
a differential calculating section that calculates a differential between the first counter value generated by the first counter and the second counter value of the count information received by the receiving section,
wherein the transmission period adjusting section determines the second counter value as the timing, the second counter value being equal to or greater than a value generated by adding the differential calculated by the differential calculating section to the first counter value of the first counter.

3. The control station apparatus according to claim 1, wherein the transmitting section transmits a notification signal notifying that the control information is transmitted to a desired terminal apparatus at a predetermined timing.

4. The control station apparatus according to claim 3, wherein the transmitting section transmits the notification signal a plurality of times in the same transmission period.

5. The control station apparatus according to claim 3, wherein the transmitting section transmits the notification signal in each of consecutive transmission periods.

6. A base station apparatus communicating with the control station apparatus according to claim 1, the base station apparatus comprising:
a receiving section that receives the timing information and the control information;
a transmission period changing section for shifting the transmission period at the timing in the timing information received by the receiving section; and
a transmitting section that repeats transmitting the control information to the terminal apparatus in the transmission period changed by the transmission period changing section.

7. A base station apparatus communicating with the control station apparatus according to claim 3, the base station apparatus comprising:
a receiving section that receives the timing information, the control information and the notification signal;
a selecting section that selects one of notification signals if the notification signals received by the receiving section notify that the same control information is transmitted; and
a transmitting section that transmits the notification signal selected by the selecting section.

8. A transmitting method comprising the steps of:
variably setting a transmission period to repeat transmitting the same control information and determining a timing to change the transmission period;
notifying a base station apparatus of timing information comprising information of the determined timing; and
transmitting the control information in the changed transmission period set at the timing after the timing information has been notified.

9. The transmitting method according to claim 8, further comprising the steps of:
generating a first counter value to which a constant value is added in a predetermined cycle;
receiving count information comprising information of a second counter value to which a constant value is added in a predetermined cycle and which is generated in the base station apparatus; and
calculating a differential between the first counter value generated and the second counter value of the count information received,
wherein the second counter value is determined as the timing, the second counter value being equal to or greater than a value generated by adding the differential to the first counter value.

10. The transmitting method according to claim 8,
wherein a notification signal notifying that the control information is transmitted to a desired terminal apparatus is transmitted at a predetermined timing.

11. The transmitting method according to claim 10,
wherein the notification signal is transmitted a plurality of times in the transmission period.

12. The transmitting method according to claim 10,
wherein the notification signal is transmitted in each of consecutive transmission periods.
